# EUROPEAN PATENT APPLICATION

(11) **EP 4 554 032 A1**
(43) Date of publication of application: **14.05.2025**
(21) Application number: 23208534.0
(22) Date of filing: 08.11.2023
(51) Int. Cl.: H02J 3/16, H02J 3/18

(54) **REACTIVE POWER SUPPORTING FUNCTION OF DC LOAD SYSTEMS**

(71) Applicant: Siemens Energy Global GmbH & Co. KG, 81739 München (DE)
(72) Inventor: Loku, Fisnik, 90768 Fürth (DE); Buratckii, Artem, 90459 Nürnberg (DE); Lukianov, Semen, 90461 Nürnberg (DE)

(57) **Abstract**

A reactive power supporting method for a DC load system (1) in an AC network (2), the DC load system (1) comprising a DC load unit (3) and a tapped transformer (4) with a tap changer (5) comprising several tap positions (6), a primary side (7) of the tapped transformer (4) being connected to the AC network (2) and a secondary side (8) of the tapped transformer (4) being connected to the DC load unit (3) via a rectifier (9) for supplying DC power to the DC load unit (3) with an input voltage to the rectifier (9) determined by the selection of a tap position (6) and a firing angle of a phase fired control (10), wherein if frequency or voltage of the AC network (2) are exceeding or falling below specified limits, the tap position (6) is selected such that the firing angle is as small as possible and thus the reactive power is minimized. The invention is also about a DC load system (1) with a reactive power supporting function for an AC network (2).

## Description

### TECHNICAL FIELD

The invention is about a reactive power supporting method of a DC load system in an AC network. Further, the invention is about a DC load system with a reactive power supporting function for an AC network.

### BACKGROUND

The number of installed DC load systems like electrolysis systems in the existing transmission networks continuously increases. To accelerate the green hydrogen production, the electrolysis system capacity for the planned projects achieves the GW range. Considering this, the transmission system operators (TSOs) are beginning to define requirements for the connection of such large electrolysis systems in existing networks. Some of the basic requirements that are being defined are the fault-ride-through (FRT) requirements, which define the operation areas when an electrolysis system needs to stay connected at a corresponding adjacent AC network and operation areas where the electrolysis systems are allowed to disconnect from the AC network. Additionally, initial specifications and requirements, such as the reactive power/power factor (PF - the power factor of an AC power system is defined as the ratio of the real power absorbed by the load to the apparent power flowing in the circuit) requirements and capabilities are being defined as well. These new requirements for load systems are being created based on the requirements existing for photovoltaic (PV) and wind farms.

Considering the comparatively high DC demand of several kiloamperes for hydrogen electrolysis systems, state-of-the-art thyristor-based rectifiers (B6C configuration, controlled three-phase full-wave bridge rectifier circuit) are used, mainly because of their efficiency and reliability. However, for power consumption units, such as the electrolysis systems, requirements related to the reactive power consumption are being defined and considering the converter technology used for such load systems, e.g., thyristor-based rectifiers, the active control of the reactive power by the rectifiers on their own is not possible. Control systems for thyristor-based rectifiers for electrolysis systems can control only the active power flow by providing the necessary firing angle to the rectifier units.

Moreover, since for green hydrogen production, it is planned that the electrolysis systems are connected in the vicinity of PV- or wind farms, the corresponding AC networks tend to become weaker in comparison to the networks dominated by conventional power supply. In case of a network disturbance, e.g., such as a voltage drop, the grid supporting capabilities of only the renewable generating units may not be sufficient to ensure a stable network operation. Support from load units, such as the electrolyser systems might be required as well.

Thyristor-based rectifiers are not capable of controlling the reactive power. However, to achieve an acceptable power factor at the point of connection of the electrolysis systems, system transformer units of the electrolysis systems are equipped with on load tap changers (OLTC), which are designed for each project specifically and consist of several tap positions defined for different voltage values.

The tap changer's position affects the power factor, with a higher position resulting in a lower power factor due to increased reactive power consumption. In current thyristor-based systems, reactive power consumption is not actively controlled, and tap changer control depends on the reference firing angle to influence the flow of DC current.

No additional tap changer control logic is implemented that would address more critical situations in a network, where for example a reduction of the reactive power would have been necessary to support any voltage drop scenario that may occur and destabilize the relative weaker grid. One option in the existing solutions to reduce the consumed reactive power would be to reduce the DC current reference, and thus the active power consumption to its minimum operational point. However, operating a system under these conditions is certainly not ideal and an operator will try to prevent such a mode of operation.

### SUMMARY OF INVENTION

Network instabilities represent a significant challenge in modern power systems. These instabilities can manifest as fluctuations in power supply, causing disruptions and inefficiencies in the operation of various devices and infrastructure. To meet these challenges, it is an object of the invention to provide an innovative solution that enables better integration of renewable energy sources while ensuring grid stability.

The object of the invention is achieved by the independent claims. The dependent claims describe advantageous developments and modifications of the invention.

In accordance with the invention there is provided a reactive power supporting method for a DC load system in an AC network, the DC load system comprising a DC load unit and a tapped transformer with a tap changer comprising several tap positions, a primary side of the tapped transformer being connected to the AC network and a secondary side of the tapped transformer being connected to the DC load unit via a rectifier for supplying DC power to the DC load unit with an input voltage to the rectifier determined by the selection of a tap position and a firing angle of a phase fired control, wherein the tap position is selected such that the firing angle is as small as possible and thus the reactive power is minimized.

In an advantageous embodiment of the invention the DC load system further comprises a control system with an outer loop controller and an inner loop controller, a sampling time of the inner loop controller being shorter than a sampling time of the outer loop controller, the DC load system further comprising a tap changer control logic being implemented in the outer loop controller, a frequency and a voltage at the primary side of the tapped transformer are constantly being monitored by the inner loop controller and if the frequency or the voltage are exceeding or falling below specified limits, a signal is sent to the outer loop controller, and a tap position is determined depending on a first droop control relating a voltage level to a reactive power consumption by the DC load system and on a second droop control relating an active and a reactive power consumption of the DC load system, thus defining the minimum required value for a power factor, wherein an output of the first and second droop controls is compared to values corresponding to the tap positions and wherein the tap changer is switched to the tap position thus determined.

The essential idea of the present invention is that the existing control logic which defines conditions for operation of tap changer is extended by including a criterion that is more suited for providing a reactive power supporting function.

The proposed idea is the following: In case of a critical network situation, such as a voltage drop, different grid codes might require that the consumed reactive power via the DC load systems is reduced to its minimum in order to not further facilitate the critical situation of the network. According to the invention a lower-level controller of the DC load system is initially adjusted to monitor at all times the frequency and the voltage level at the input of the transformer. In case a critical network situation is detected by the lower-level controls (sampling time typically at 250 µs), a signal is sent to the higher-level controls (sampling time typically at 50 ms), where the tap changer control logic is normally implemented. According to the invention the present tap changer control logic is overridden, and the firing angle alone does not define anymore whether the tap changer should increase or decrease by a single or more positions. Here, a new control logic sequence is suggested which always controls the following:
a. The voltage level at the primary side of the transformer
b. The consumed reactive power at the primary side of the transformer

With these parameters, the control logic which defines conditions for operation of the tap changer can be implemented to reduce the reactive power consumption. This can be done by defining two droop controls:

The first droop control would relate the voltage level to the reactive power consumption by the DC load system. Voltage and reactive power are closely related in electrical power systems. Reactive power affects the voltage in a network, and voltage regulation is an essential task in the transmission and distribution of electrical energy. The relationships between voltage and reactive power can be described as follows: 1) with constant active power and increasing reactive power, the voltage in an electrical network increases. 2) When the reactive power in a network is reduced, the voltage decreases.

The second droop control would relate the active and the reactive power consumption of the electrolysis system, thus defining the minimum required values for the power factor. Active power (P) and reactive power (Q) are two different aspects of electrical power in alternating current systems. Active power is the power that is used to drive loads, while reactive power is the power that circulates in inductive and capacitive components without actually performing work.

A droop function that considers both active power and reactive power could be used in a combined control system that encompasses both frequency and voltage regulation.

The output from the droop controls will then be compared to values corresponding to the designed tap changer positions and accordingly a new tap position will be determined which would correspond to the required reactive power consumption by the electrolysis systems for the given critical network scenario.

It is advantageous, when a hysteresis is defined for the return to a tap position with higher voltage to minimize the number of tap position changes. Frequent tap position changes can cause wear and tear on the tap-changing equipment. By implementing hysteresis, the number of changes can be reduced, prolonging the lifespan of the equipment, and reducing maintenance costs. Hysteresis helps to prevent rapid oscillations between tap positions, which could lead to voltage instability in the electrical grid. By providing a buffer zone, hysteresis ensures that the tap position is changed only when necessary, contributing to improved voltage stability.

Further, it is advantageous when the DC load system is an electrolysis system, and the DC load is an electrolyser. Such a system already has the necessary hardware and can be upgraded with comparatively little effort to carry out the method according to the invention.

It is advantageous when a sampling time of the inner loop controller is below 300 µs. This ensures that even short-term disturbances in the AC network can be registered.

It is also advantageous when tap positions corresponding to required reactive power consumption for a critical given network scenario are predefined. This is the most likely way to quickly determine a measure that makes sense for the grid and the system alike.

The objective of the invention directed to a DC load system is solved by a DC load system with a reactive power supporting function for an AC network, the DC load system comprising a DC load unit and a tapped transformer with a tap changer comprising several tap positions, a primary side of the tapped transformer being connected to the AC network and a secondary side of the tapped transformer being connected to the DC load unit via a rectifier for supplying DC power to the DC load unit with an input voltage to the rectifier determined by the selection of a tap position and a firing angle of a phase fired control, wherein a control system is adapted to select the tap position such that the firing angle is as small as possible and thus the reactive power is minimized if the frequency or the voltage of the AC network are exceeding or falling below specified limits in case frequency or voltage of the AC network are exceeding or falling below specified limits.

It is advantageous when the DC load system further comprises a control system with an outer loop controller and an inner loop controller, a sampling time of the inner loop controller being shorter than a sampling time of the outer loop controller, the DC load system further comprising a tap changer control logic being implemented in the outer loop controller, wherein the inner loop controller is adapted to constantly monitor a frequency and a voltage at the primary side of the tapped transformer and if the frequency or the voltage are exceeding or falling below specified limits, to send a signal to the outer loop controller, and wherein the outer loop controller is adapted to determine a tap position depending on a first droop control relating a voltage level to a reactive power consumption by the DC load system and on a second droop control relating an active and a reactive power consumption of the DC load system, thus defining the minimum required value for a power factor, the outer loop controller being adapted to compare an output of the first and second droop controls to values corresponding to the tap positions and to switch the tap changer to the tap position thus determined.

The main advantage of the present invention is that in comparison to the existing tap changer control algorithms that do not take the consumed reactive power directly into consideration (but rather indirectly via the reference firing angle and the values used for the transformer design), this invention proposes a tap changer control logic which in case of critical network situations, such as voltage sag, can enhance the network voltage indirectly by reducing the reactive power consumption of the DC load system thereby reducing significantly the need for additional reactive power compensation units.

Compared to possible exiting solutions which involve reducing the active power consumption to its minimum value to reduce the reactive power consumption as well, the resulting reactive power consumption according to the present invention is of several magnitudes higher.

### BRIEF DESCRIPTION OF DRAWINGS

**FIG 1** shows an electrolysis system according to the invention and
**FIGs 2 and 3** show the interaction of tap position and firing angle.

### DESCRIPTION OF EMBODIMENTS

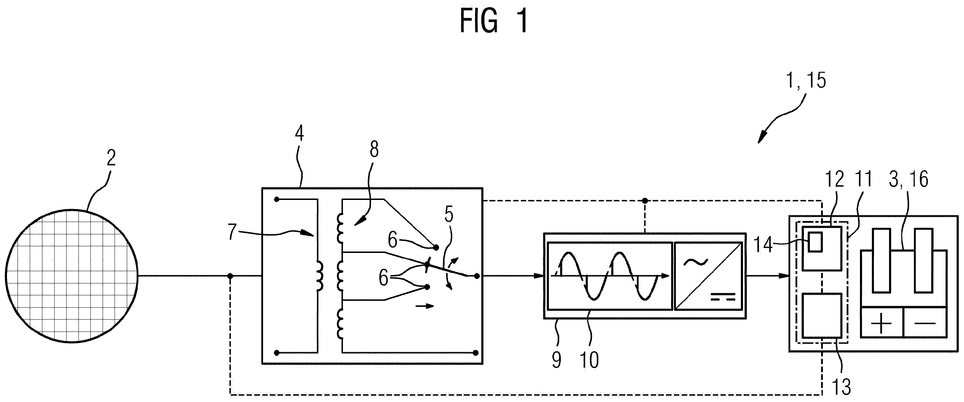

Figure 1 shows a DC load system 1, for example an electrolysis system 15, with a reactive power supporting function according to the invention. The electrolysis system 15 comprises an electrolyser 16 as DC load unit 3 and a tapped transformer 4 with a tap changer 5 comprising several tap positions 6. A primary side 7 of the tapped transformer 4 is connected to the AC network 2 and a secondary side 8 of the tapped transformer 4 is connected to the electrolyser 16 via a rectifier 9 for supplying DC power to the electrolyser 16 with an input voltage to the rectifier 9 determined by the selection of a tap position 6 and a firing angle of a phase fired control 10. According to the invention a control system 11 is adapted to select the tap position 6 such that the firing angle is as small as possible and thus the reactive power is minimized.

The control system 11 comprises an outer loop controller 12 and an inner loop controller 13, a sampling time of the inner loop controller 13 being shorter than a sampling time of the outer loop controller 12. The electrolysis system 15 also comprises a tap changer control logic 14 being implemented in the outer loop controller 12. According to the invention the inner loop controller 13 is adapted to constantly monitor a frequency and a voltage at the primary side 7 of the tapped transformer 4. If the frequency or the voltage are exceeding or falling below specified limits, the inner loop controller 13 sends a signal to the outer loop controller 12. The outer loop controller 12 is adapted to determine a tap position 6 depending on a first droop control relating a voltage level to a reactive power consumption by the electrolysis system 13 and on a second droop control relating an active and a reactive power consumption of the electrolysis system 15, thus defining the minimum required value for a power factor, the outer loop controller 12 being adapted to compare an output of the first and second droop controls to values corresponding to the tap positions 6 and to switch the tap changer 5 to the tap position 6 thus determined.

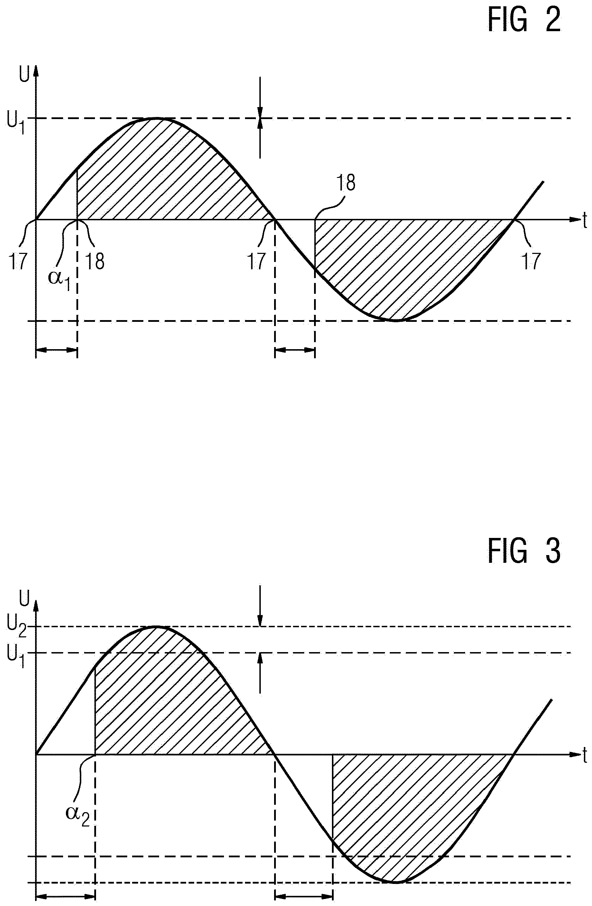

Figures 2 and 3 explain phase-angle control that serves as power controller for electrical loads that are operated with alternating voltage. In phase-angle control, the current flow is usually controlled by a triac (anti-parallel circuit of two thyristors). After a zero-crossing 17 of an AC voltage (and current), the triac does not conduct the current until it receives an ignition pulse 18; from this time (phase of the AC signal) onwards, the load is supplied with energy until the next zero-crossing 17. The later the triac is ignited, the lower the average power.

Figures 2 and 3 show how control via phase-angle works using the example of a tap changer 5 of a tapped transformer 4 in two operating states. For an operating point of full loading at 100% DC current I_{dc}, the tap changer 5 of Figure 1 is designed to correspond to the output voltage level of the nominal secondary side AC voltage level U₁ of the transformer with a resulting firing angle being at a first angle *α*₁. Let us assume that the resulting power factor is 0.9.

However, if the tap changer 5 should be at a higher tap position corresponding to a voltage level U₂ higher than U₁ as shown in Figure 2, the firing angle increases to a value ai which is larger than *α*₁ (since the input voltage to the rectifiers increases and a higher firing angle is sufficient to achieve the necessary DC current as specified in the DC current controls), and the power factor would decrease to a lower value of approximately 0.8. The reason for this decrease in the power factor value is that even though the active power consumption remains constant, the reactive power consumption has increased.

Regarding the reactive power consumption, no active control is implemented in the current thyristor-based systems. The reactive power consumption is defined when designing the transformer unit, with the aim to achieve a certain minimum PF of e.g., 0.9. Furthermore, the tap changer control 14 usually depends only on the reference firing angle. For example: If for the tap position corresponding to a voltage level U₁ at the secondary side of the transformer the firing angle would be below e.g., *α*₁, the tap changer 5 would be triggered to move to a higher tap position 6 resulting in a higher output voltage U₂. This is done since, for an angle below *α*₁, the control cannot further increase the DC current to a required reference by much and the limit of the DC current due to the provided input AC voltage to the rectifiers would be reached. By changing to a higher tap position 6, the firing angle increases and there is more room for the controller to influence the DC current.

### REFERENCE SIGNS LIST

- 1: DC load system
- 2: AC network
- 3: DC load unit
- 4: tapped transformer
- 5: tap changer
- 6: tap position
- 7: primary side
- 8: secondary side
- 9: rectifier
- 10: phase fired control
- 11: control system
- 12: outer loop controller
- 13: inner loop controller
- 14: tap changer control logic
- 15: electrolysis system
- 16: electrolyser
- 17: zero-crossing
- 18: ignition pulse

## Claims

1. A reactive power supporting method for a DC load system (1) in an AC network (2), the DC load system (1) comprising a DC load unit (3) and a tapped transformer (4) with a tap changer (5) comprising several tap positions (6), a primary side (7) of the tapped transformer (4) being connected to the AC network (2) and a secondary side (8) of the tapped transformer (4) being connected to the DC load unit (3) via a rectifier (9) for supplying DC power to the DC load unit (3) with an input voltage to the rectifier (9) determined by the selection of a tap position (6) and a firing angle of a phase fired control (10), **characterized in that** if frequency or voltage of the AC network (2) are exceeding or falling below specified limits, the tap position (6) is selected such that the firing angle is as small as possible and thus the reactive power is minimized.

2. The reactive power supporting method according to claim 1 for a DC load system (1) in an AC network (2), the DC load system (1) further comprising a control system (11) with an outer loop controller (12) and an inner loop controller (13), a sampling time of the inner loop controller (13) being shorter than a sampling time of the outer loop controller (12), the DC load system (1) further comprising a tap changer control logic (14) being implemented in the outer loop controller (12), **characterized in that** a frequency and a voltage at the primary side (7) of the tapped transformer (4) are constantly being monitored by the inner loop controller (13) and if the frequency or the voltage are exceeding or falling below specified limits, a signal is sent to the outer loop controller (12), and a tap position (6) is determined depending on a first droop control relating a voltage level to a reactive power consumption by the DC load system (1) and on a second droop control relating an active and a reactive power consumption of the DC load system (1), thus defining the minimum required value for a power factor, wherein an output of the first and second droop controls is compared to values corresponding to the tap positions (6) and wherein the tap changer (5) is switched to the tap position (6) thus determined.

3. The method according to claim 1 or claim 2, wherein a hysteresis is defined for the return to a tap position (6) with higher voltage to minimize the number of tap position changes.

4. The method according to one of the preceding claims, wherein the DC load system (1) is an electrolysis system (15) and the DC load (2) is an electrolyser (15).

5. The method according to the preceding claims, wherein a sampling time of the inner loop controller (13) is below 300 µs.

6. The method according to the preceding claims, wherein tap positions (6) corresponding to required reactive power consumption for a critical given network scenario are predefined.

7. A DC load system (1) with a reactive power supporting function for an AC network (2), the DC load system (1) comprising a DC load unit (3) and a tapped transformer (4) with a tap changer (5) comprising several tap positions (6), a primary side (7) of the tapped transformer (4) being connected to the AC network (2) and a secondary side (8) of the tapped transformer (4) being connected to the DC load unit (3) via a rectifier (9) for supplying DC power to the DC load unit (3) with an input voltage to the rectifier (9) determined by the selection of a tap position (6) and a firing angle of a phase fired control (10), **characterized in that** a control system (11) is adapted to select the tap position (6) such that the firing angle is as small as possible and thus the reactive power is minimized, in case frequency or voltage of the AC network (2) are exceeding or falling below specified limits.

8. The DC load system (1) with a reactive power supporting function according to claim 7 for an AC network (2), the DC load system (1) further comprising a control system (11) with an outer loop controller (12) and an inner loop controller (13), a sampling time of the inner loop controller (13) being shorter than a sampling time of the outer loop controller (12), the DC load system (1) further comprising a tap changer control logic (14) being implemented in the outer loop controller (12), **characterized in that** the inner loop controller is adapted to constantly monitor a frequency and a voltage at the primary side (7) of the tapped transformer (4) and if the frequency or the voltage are exceeding or falling below specified limits, to send a signal to the outer loop controller (12), and wherein the outer loop controller (12) is adapted to determine a tap position (6) depending on a first droop control relating a voltage level to a reactive power consumption by the DC load system (1) and on a second droop control relating an active and a reactive power consumption of the DC load system (1), thus defining the minimum required value for a power factor, the outer loop controller (12) being adapted to compare an output of the first and second droop controls to values corresponding to the tap positions (6) and to switch the tap changer (5) to the tap position (6) thus determined.

9. The DC load system (1) according to claim 8, wherein the DC load system (1) is an electrolysis system (15) and the DC load (3) is an electrolyser (16).
